# FASCICULE DE BREVET EUROPEEN

(11) **EP 1 919 836 B1**
(45) Date de publication et mention de la délivrance du brevet: **10.05.2017**
(21) Numéro de dépôt: 06794494.2
(22) Date de dépôt: 21.07.2006
(51) Int. Cl.: C03C 17/34, C04B 41/89, C09D 183/08, C04B 41/52, C09D 183/14

(54) **REVETEMENT HYDROPHOBE COMPRENANT UN PRIMAGE COMPRENANT UN BIS-SILANE ET UNE COUCHE HYDROPHOBE COMPRENANT UN ALKYLSILANE FLUORE**
WASSERABWEISENDE BESCHICHTUNG MIT EINER GRUNDIERUNGSSCHICHT MIT EINEM BIS-SILAN UND EINER WASSERABWEISENDEN SCHICHT MIT EINEM FLUORIERTEN ALKYLSILAN
HYDROPHOBIC COATING COMPRISING A PRIMING INCLUDING A BIS-SILANE AND A HYDROPHOBIC LAYER INCLUDING A FLUORINATED ALKYSILANE

(30) Priorité: 26.07.2005 FR 0552309
(43) Date de publication de la demande: 14.05.2008
(73) Titulaire: SAINT-GOBAIN GLASS FRANCE, 92400 Courbevoie (FR)
(72) Inventeur: CODAZZI, Nathalie, F-95600 Eaubonne (FR); HUIGNARD, Arnaud, F-75018 Paris (FR); DROS, Anne, Berend, F-75003 Paris (FR)
(74) Mandataire: Saint-Gobain Recherche
(86) Numéro de dépôt international: PCT/FR2006/050741
(87) Numéro de publication internationale: WO 2007/012779

(56) Documents cités:
- EP-A- 0 492 545
- EP-A1- 1 229 085
- EP-B- 0 759 413
- EP-B- 1 102 825
- US-B1- 6 258 156

## Description

La présente invention concerne le traitement hydrophobe/oléophobe d'un substrat, notamment constitué d'un matériau verrier, d'une céramique, vitrocéramique etc.

Les vitrages selon l'invention sont par exemple des vitrages en verre. Ils sont utilisés, en particulier, dans le domaine aéronautique, ferroviaire ou automobile. Ils peuvent aussi être utilisés dans le domaine du bâtiment ou dans le domaine de l'aménagement intérieur comme, par exemple, des panneaux décoratifs, pour l'ameublement, l'électroménager (portes de réfrigérateurs, de fours, vitrines) etc.

Ce type de traitement vise de manière connue à donner au substrat le caractère de non-mouillabilité, encore appelé anti-pluie.

Par mouillabilité, on désigne la propriété selon laquelle des liquides polaires ou non polaires adhèrent sur le substrat et forment un film gênant, ainsi que la tendance d'un substrat à retenir les poussières ou salissures de toutes natures, traces de doigts, insectes, etc.

La présence d'eau et/ou de salissures est gênante en particulier pour un substrat transparent du type vitrage, notamment utilisé dans le domaine du transport.

La propriété de non-mouillabilité d'un substrat, plus communément désignée hydrophobie/oléophobie, est d'autant plus élevée que les angles de contact entre un liquide hydrophile ou oléophile et ce substrat sont élevés, par exemple d'au moins 90° pour l'eau. Le liquide a alors tendance à s'écouler aisément, sous forme de gouttes, sur le substrat, par simple gravité si le substrat est incliné, ou sous l'effet de forces aérodynamiques dans le cas d'un véhicule en mouvement. Des agents connus pour conférer cette propriété d'hydrophobie/oléophobie sont par exemple des alkylsilanes fluorés tels que décrits dans les demandes de brevets EP 0 492 417, EP 0 492 545 et EP 0 672 779. Selon ces documents, cette couche peut être obtenue en appliquant sur la surface d'un substrat une solution contenant des organosilanes fluorés dans un solvant organique non aqueux. Comme solvant organique non aqueux, le document EP 0 492 545 cite, en particulier, du n-hexadécane, du toluène, du xylène, etc. Ces solvants sont particulièrement appropriés pour un chlorosilane fluoré. Il est également possible, selon ce document, d'utiliser un alcool méthylique ou éthylique comme solvant lorsque le silane fluoré est un alkoxysilane fluoré.

Des agents hydrophobes/oléophobes courants sont, en particulier, des alkylsilanes dont le groupe alkyle comporte au moins une extrémité perfluorée, c'est-à-dire consistant en un groupement F₃C-(CF₂)ₙ-, dans lequel n est un nombre entier positif ou nul. Pour ceux-ci, la demande de brevet EP 0 719 743 indique les carbures perfluorés comme solvants appropriés.

L'un des problèmes se posant avec le plus d'acuité dans le domaine de l'invention est tout d'abord celui de l'abrasion du revêtement hydrophobe/oléophobe. Cette abrasion se produit plus ou moins au cours des opérations de nettoyage du substrat, périodiquement indispensables en particulier pour restaurer une vision satisfaisante à travers un substrat transparent. On cherche ainsi constamment à ralentir l'élimination progressive des revêtements hydrophobes/oléophobes de types précités, qui se produit notamment sous l'action d'essuie-glaces dans le cas d'un pare-brise automobile. D'autre part, une telle élimination peut aussi résulter d'une dégradation par le rayonnement ultraviolet.

Il est également connu de la demande EP 0 492 545 A2 précitée d'accroître l'adhésion du revêtement hydrophobe/oléophobe en soumettant le substrat à un traitement de primage avant d'appliquer le revêtement. Ce traitement consiste à former une fine couche intermédiaire à partir d'agents dits de primage ou primaires, qui sont des composés du silicium ayant au moins deux fonctions hydrolysables. De façon bien connue, l'une des deux fonctions hydrolysables permet la liaison chimique au substrat par un atome d'oxygène lié à l'atome de silicium ; la seconde fonction hydrolysable permettant la fixation de l'agent hydrophobe/oléophobe. Sont mentionnés dans la demande EP 0 492 545 A2, en tant qu'agents de primage, les composés SiCl₄, SiHCl₃, SiH₂Cl₂ et Cl-(SiCl₂O)ₙSiCl₃, n étant un entier compris entre 1 et 4.

Le brevet EP 944 687 décrit plus particulièrement des revêtements anti-pluie élaborés par voie liquide et comportant une sous-couche ou couche de primage à base de silice sol-gel obtenue à partir d'un précurseur du type Si(OEt)₄ ou SiCl₄ et une couche fonctionnelle à base de perfluoroalkylsilane.

Afin d'améliorer encore les propriétés de résistance mécanique du revêtement hydrophobe, le brevet EP 1 102 825 décrit une composition pour un revêtement hydrophobe/oléophobe intégrant dans une même couche à la fois un alkylsilane fluoré et un bis-silane.

Cependant, si de telles sous-couches permettent d'obtenir des performances en conformité avec la grande majorité des spécifications UV et résistances mécaniques actuelles, telle que par exemple celles imposées par les constructeurs automobiles, notamment à l'abrasion, elles ne présentent en général pas une inertie chimique suffisante leur permettant typiquement de satisfaire des critères de résistance à la corrosion saline.

En particulier, les essais menés par la demanderesse ont démontré que dans la majorité des cas, de tels revêtements remplissaient difficilement le cahier des charges imposé en la matière par les constructeurs automobiles et mesuré par exemple par le test de résistance au Brouillard Salin Neutre (BSN) selon la norme NF ISO 9227. Ainsi, les revêtements décrits dans les demandes EP 944 687 et EP 1 102 825, dont les performances de résistance aux UV et de résistance mécanique sont apparues satisfaisantes, présentent des performances insuffisantes à la corrosion saline, telle que mesurée par le test BSN. Cette insuffisance pourrait limiter leur développement, en particulier sur le marché asiatique où les normes sont les plus sévères dans ce domaine.

La présente invention a ainsi pour principal objet des revêtements résistants non seulement à l'abrasion et aux rayonnements UV mais présentant en outre une importante inertie chimique, c'est-à-dire leur permettant typiquement de remplir les cahiers des charges imposés à l'heure actuelle par l'industrie automobile, à la fois en termes de résistance à l'abrasion, aux UV et à la corrosion saline. Les revêtements selon l'invention présentent en outre des performances sensiblement égales à celles des revêtements connus à cette date en ce qui concerne les autres spécifications nécessaires à leurs différentes utilisations telles que par exemple la tenue mécanique, la résistance à l'eau etc.

A cette fin, selon un premier aspect, l'invention a pour objet un procédé d'obtention d'un revêtement hydrophobe/oléophobe sur un substrat de préférence constitué d'un matériau verrier, d'une céramique, ou d'une vitrocéramique, ledit procédé se caractérisant en ce qu'il comprend :
a) une première étape consistant à appliquer sur ledit substrat une première couche de primage obtenue à partir d'un agent de primage de formule :

   (X¹)_{3-q}(R¹)_{q}Si-R³-Si(X²)_{3-q'}(R²)_{q'}

   dans laquelle
   - Si est le silicium ;
   - R³ représente une chaîne carbonée linéaire, ramifiée ou aromatique, de préférence linéaire, dans lequel le nombre de carbones établissant la liaison entre les deux atomes de silicium est inférieur à 6 et de préférence est compris entre 1 et 4;
   - R¹ et R² représentent chacun un groupe alkyle ou un atome d'hydrogène ;
   - X¹ et X² sont des groupements hydrolysables identiques ou différents ;
   - q et q' sont égaux à 0 ou 1 et de préférence sont nuls et
b) une deuxième étape de dépôt sur ladite première couche d'un revêtement hydrophobe comprenant au moins un alkylsilane fluoré.

Par le nombre de carbones établissant la liaison entre deux atomes de silicium, on entend, au sens de la présente description, le plus petit nombre d'atomes de carbone permettant la jonction linéaire entre deux atomes de silicium et non le nombre total des atomes de carbone placés entre les deux siliciums. Cette définition est notamment pertinente lorsqu'un groupement ramifié ou à cycle aromatique est présent entre ceux-ci. A titre d'exemple, ce nombre de carbones est égal à 8 dans le bis-silyléthylbenzène décrit dans l'exemple 8.

En général, X¹ et X² sont des groupements alkoxy, de préférence méthoxy ou éthoxy, ou des groupements halogénures.

L'étape de dépôt du revêtement hydrophobe est par exemple mise en oeuvre à partir d'une solution obtenu à partir d'un perfluoroalkylsilane du type représenté par la formule générale :

F₃C-(CF₂)ₘ-(CH₂)ₙ-Si(X)₃₋ₚ(R)ₚ

dans laquelle :
- m = 0 à 15, de préférence 5 à 9;
- n = 1 à 5, de préférence n = 2
- p = 0, 1 ou 2, de préférence 0 ou 1, de manière très préférée 0;
- R est un groupe alkyle ou un atome d'hydrogène ; et
- X est un groupement hydrolysable tel qu'un groupement halogénure ou un groupement alkoxy.

Selon un mode alternatif, l'étape de dépôt du revêtement hydrophobe est mise en oeuvre à partir d'une solution obtenu à partir d'un perfluoroalkylsilane du type perfluoropolyéthersilane par exemple tel que décrit dans le brevet EP 844 265 ou encore dans la demande de brevet US 2004/0247886 ou le brevet US 6,649,272 B2.

De préférence, ledit perfluoropolyéthersilane est du type représenté par la formule générale: 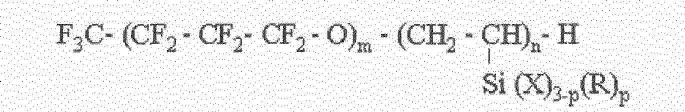 ou par la formule générale 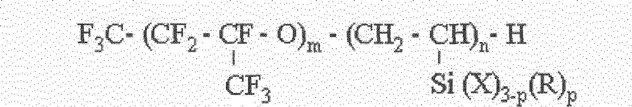 dans lesquelles :
- m = 2 à 30
- n = 1 à 3, de préférence n = 1
- p = 0, 1 ou 2, de préférence 0 ou 1, de manière très préférée 0;
- R est un groupe alkyle ou un atome d'hydrogène ; et
- X est un groupement hydrolysable tel qu'un groupement halogénure ou un groupement alkoxy.

Le revêtement hydrophobe pour substrat verrier, céramique, vitrocéramique comprend:
- une couche de primage directement appliquée sur ledit substrat et comprenant des groupements Si-R³-Si, R³ étant choisi dans le groupe constitué par les chaînes alkyls linéaires, ramifiées ou aromatiques, de préférence linéaires, dans lequel le nombre de carbones établissant la liaison entre les deux atomes de silicium est inférieur à 6 et de préférence est compris entre 1 et 4,
- une couche de revêtement en liaison avec ladite couche de primage et comprenant un alkylsilane à extrémité perfluorée hydrophobe/ oléophobe.

Selon un premier mode, ledit alkylsilane est du type représenté par la formule générale:

F₃C-(CF₂)ₘ - (CH₂)ₙ - Si

avec :
- m = 0 à 15, de préférence 5 à 9;
- n = 1 à 5, de préférence n = 2.

Selon un second mode, ledit alkylsilane comprend un groupement du type perfluoropolyéther. De préférence, ledit alkylsilane est du type représenté par la formule générale : 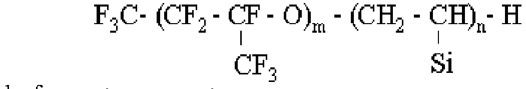 ou par la formule generale : 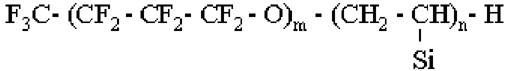 dans lesquelles
- m = 2 à 30
- n = 1 à 3, de préférence n = 1.

La couche hydrophobe peut également comprendre ou être constituée par un mélange d'un alkylsilane à extrémité perfluorée selon le premier mode et d'un alkylsilane comprenant un groupement perfluoropolyéther selon le second mode, tel que décrit par exemple dans la demande EP 1 229 085.

Par exemple, l'épaisseur de la couche de primage est comprise entre 1 et 20 nm, de préférence entre 2 et 5 nm.

L'épaisseur de la couche de revêtement peut être comprise entre 1 et 10 nm, de préférence entre 1 et 5 nm.

Un autre objet de l'invention consiste en un produit dont la surface extérieure, le plus souvent constituée par un matériau verrier, céramique, vitrocéramique ou une matière minérale naturelle, est munie au moins en partie d'un revêtement hydrophobe/oléophobe tel que précédemment décrit ou obtenu à partir d'un procédé tel que précédemment décrit.

Le produit de l'invention est par exemple un vitrage monolithique, feuilleté ou multiple.
Il est précisé que l'on entend :
Par " vitrage monolithique ", un vitrage constitué d'une unique feuille de verre;
Par " vitrage feuilleté ", un empilement de plusieurs feuilles solidaires les unes des autres, par exemple de feuilles de verre ou de matière plastique fixées les unes aux autres au moyen de couches adhésives de polyvinylbutyral, polyuréthane... ; et
Par " vitrage multiple ", un assemblage de feuilles disjointes, c'est-à-dire notamment séparées les unes des autres par des couches d'air.

L'intérêt du revêtement hydrophobe/oléophobe de l'invention pour ce type de produits est double. Tout d'abord, il permet l'écoulement de gouttes d'eau ou autre liquide sur des surfaces verticales ou inclinées, éventuellement sous l'effet de forces aérodynamiques par exemple dans le cas d'un véhicule en mouvement. De plus, ces gouttes qui s'écoulent englobent des salissures et les entraînent. La visibilité à travers le vitrage est améliorée à un degré tel que l'on puisse se dispenser dans certains cas de dispositifs de nettoyage (lave-vitres, essuie-glaces).

Enfin, l'invention a également pour objet les applications du produit décrit précédemment :
- en tant que vitrage pour véhicule de transport (vitres latérales automobiles, pare-brise aviation ou automobile) ou pour le bâtiment ;
- en tant que plaque de cuisson vitrocéramique, porte de four ;
- en tant qu'élément de mobilier urbain, notamment comme élément d'abribus ; et
- en tant qu'élément mobilier, notamment comme miroir, tablette de rangement, tablette pour appareil électroménager tel que réfrigérateur, élément de cabine de douche, cloison ;
- en tant qu'écran, notamment écran de télévision, écran tactile, écran plasma.

Les exemples suivants servent à illustrer l'invention sans toutefois en limiter la portée, sous aucun des aspects décrits.
Dans ces exemples, tous les pourcentages sont donnés en masse.

### EXEMPLE 1

Selon cet exemple un premier échantillon E1 conforme à l'invention est préparé.

0,3% de bis(triéthoxysilyl)éthane (CH₃O)₃S₁(CH₂)₂S₁(OCH₃)₃ est additionné à une solution comprenant 90% d'isopropanol et 10% d'acide chlorhydrique 0,3 N.

Parallèlement, une solution à 3% de perfluorodécyltriéthoxysilane CF₃(CF₂)₇(CH₂)₂Si(OC₂H₅)₃ dans le mélange isopropanol (90%) / acide chlorhydrique 0,3 N (10%) est préparée. Les deux solutions sont maintenues sous agitation pendant 15 minutes.

Selon une première étape de dépôt, la solution à base de bis(triéthoxysilyl)éthane est ensuite déposée par chiffonnage (4 passes croisées) sur la face air d'un substrat de verre préalablement poli à l'aide d'une solution d'oxyde de cérium puis abondamment rincé à l'eau déminéralisée. L'épaisseur de la couche de primage ainsi obtenue est d'environ 4 nm.

Dès que le dépôt de la sous-couche est achevé, la solution de perfluorodécyltriéthoxysilane est à son tour déposée par la même technique de chiffonnage. Dans cet exemple et dans les suivants, le dépôt des différentes couches est effectué par la technique bien connue du chiffonnage, dans laquelle le matériau ou son précurseur est déposé par l'intermédiaire d'un chiffon imbibé. Bien entendu, on ne sortirait cependant pas du cadre de l'invention si le dépôt était mis en oeuvre par tout autre technique connue à cette fin dans le domaine, en particulier par pulvérisation, qui permet par ailleurs un meilleur contrôle de l'épaisseur des couches, par centrifugation, selon des procédés connus dans le métier sous le terme anglais spin-coating, par trempage (procédés souvent appelés dip-coating) ou encore par arrosage (procédés souvent appelés flow-coating).
Après 15 minutes d'attente à température ambiante, l'excédent de fluorosilane est éliminé par un nettoyage à l'isopropanol. L'épaisseur de la couche obtenue est d'environ 4 nm.

En variante, un autre échantillon E2 a été préparé à partir des mêmes réactifs et techniques avec pour différence que les dépôts successifs ont été effectués cette fois sur la face étain du substrat verrier.

### EXEMPLE 2 :

Les mêmes étapes que précédemment sont reproduites pour la préparation d'un second échantillon E3, mais le substrat verrier est cette fois traité sur sa face air par une solution de primage de Si(OCH₃)₄ à 0,4 % en poids dans une solution de 90% en poids d'éthanol et 10 % en poids d'eau, au cours de la première étape de dépôt.
Le substrat ainsi revêtu de la sous-couche est alors mis en contact à température ambiante avec une solution à 3 % de CF₃(CF₂)₇(CH₂)₂Si(OC₂H₅)₃ dans un mélange de 90 % d'éthanol et 10% d'eau, acidifié par HCl à 0,3 N.

### EXEMPLE 3 :

Un troisième échantillon E4 est préparé selon un mode identique aux précédents et conformément aux enseignements du brevet EP 1 102 825.

Le substrat verrier, identique à celui utilisé dans les exemples précédents et ayant subi la même préparation sur sa face air, est traité par une solution de primage de Si(OCH₃)₄ à 0,4 % en poids dans une solution de 90% en poids d'éthanol et 10 % en poids d'eau.

Le substrat et son primage sont alors mis en contact à température ambiante avec une solution de CF₃(CF₂)₇(CH₂)₂Si(OC₂H₅)₃ et (CH₃O)₃Si(CH₂)₂Si(OCH₃)₃ en proportions respectives de 3 et 1 % en poids dans un mélange de 90 % en poids d'éthanol et 10% en poids d'eau, acidifié par HCl à 0,3 N.

### EXEMPLE 4 :

On évalue les quatre échantillons E1, E2, E3 et E4 préparés selon les exemples 1 à 3 selon les critères suivants :
1°) La mesure de l'angle de contact de l'eau initial, qui fournit une indication de référence du caractère hydrophobe du substrat greffé.
2°) La résistance à l'abrasion, obtenue par la mesure de l'angle de contact résiduel de l'eau sur l'échantillon après que le revêtement hydrophobe/oléophobe greffé ait subi une abrasion suivant deux tests différents:
   a) le test de friction Opel®, mené sur les échantillons avec un feutre de dureté H1, une charge de 0,4 kg/cm² sur une surface de 1,5 cm², avec une vitesse de translation de 50 cycles/minute et une vitesse de rotation de 6 tours/minute. Un échantillon est jugé satisfaisant au test si l'angle de contact reste supérieur à 80° après 5000 cycles ;
   b) le test de friction Toyota®, pratiqué selon la norme TSR7503G, une charge de 0,3 kg/cm² sur une surface de 4 cm² avec une vitesse de translation de 40 cycles/minute et en utilisant un dispositif fabriqué par la société Daiei Kagaku Seiki. Un échantillon est jugé satisfaisant au test si l'angle de contact reste supérieur à 80°, après 1500 cycles.
3°) la résistance au rayonnement UV-A, mesurée par des tests d'illumination en continu des échantillons par une lampe au Xénon émettant un rayonnement UV dont 1' éclairement intégré entre 300 et 400 nm est de 60 W/m². Un échantillon est jugé satisfaisant au test si l'angle de contact reste supérieur à 80° après 2000 heures d'exposition. 4°) La résistance à la corrosion saline, mesurée par le test Brouillard Salin Neutre (BSN) tel que décrit selon la norme NF ISO 9227. Le test consiste en une pulvérisation de fines gouttelettes d'eau saline (solution NaCl à 50g/l de pH = 7) à une température de 35°C. Les échantillons sont inclinés à 20° par rapport à la verticale. La norme la plus sévère en vigueur à l'heure actuelle pour une application sur des vitres latérales automobiles exige un angle de contact de l'eau supérieur à 70° après 300 heures de test.

Les résultats obtenus pour les échantillons préparés conformément aux exemples 1 à 3 sont reportés dans le tableau 1 :

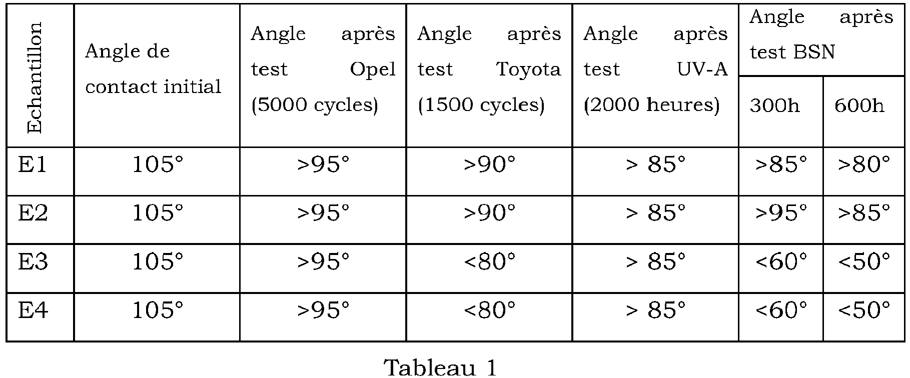

La comparaison des données reportées dans le tableau 1 montre que la présence d'une sous-couche de primage conforme à l'invention conduit à des propriétés anti-pluie initiales de la surface traitée identiques à celles obtenues avec le primage de l'art antérieur.
De même les propriétés de résistance à l'abrasion et aux UV sont sensiblement identiques, comme le montrent les résultats obtenus pour les test Opel®, Toyota® et UV sur les différents échantillons.
Les échantillons E1 et E2 comprenant le revêtement hydrophobe/oléophobe selon l'invention montrent une résistance à la corrosion saline, mesurée par le test BSN, bien meilleure que celle des revêtements connus jusqu'à présent.

### EXEMPLES 5 à 8:

Dans ces exemples, on montre l'influence de la nature de la chaîne alkyle R³ présente entre les deux atomes de silicium dans le bis-silane utilisé pour la couche de primage sur les propriétés du revêtement hydrophobe finalement obtenu. Le protocole expérimental est le même que celui décrit dans l'exemple 1, mais le précurseur utilisé pour l'obtention de la couche de primage est remplacé de la façon suivante :
Exemple 5 : préparation d'un échantillon E5 à partir de bis(triéthoxysilyl)méthane (CH₃O)₃Si(CH₂)Si(OCH₃)₃
Exemple 6 : préparation d'un échantillon E6 à partir de bis(triéthoxysilyl)hexane (CH₃O)₃Si(CH₂)₆Si(OCH₃)₃
Exemple 7: préparation d'un échantillon E7 à partir de bis(triéthoxysilyl)octane (CH₃O)₃Si(CH₂)₈Si(OCH₃)₃
Exemple 8: préparation d'un échantillon E8 à partir de bis(triéthoxysilyléthyl)benzène (CH₃O)3Si(CH₂)₂-φ-(CH₂)₂Si(OCH₃)₃, dans lequel φ est un cycle benzène.

Les résultats obtenus pour les différents tests sont reportés dans le tableau 2 :

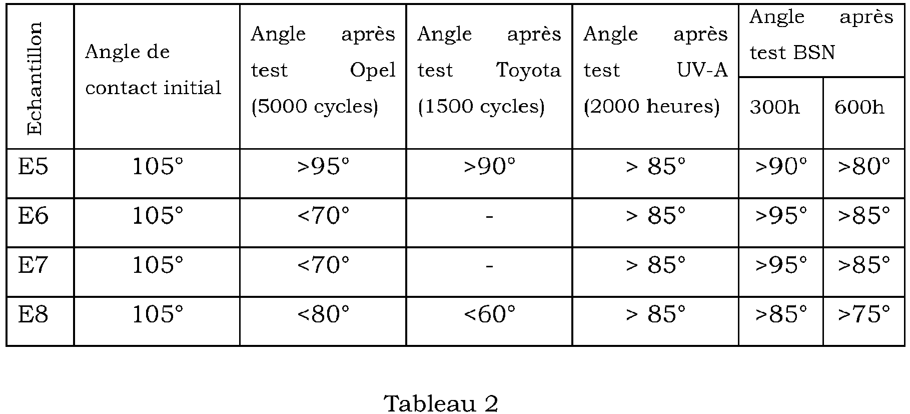

On remarque que l'augmentation de la longueur de la chaîne alkyl R³ n'influence pas les qualités de résistance à la corrosion saline. Par contre, les tests de résistance à l'abrasion sont moins favorables lorsque la chaîne carbonée linéaire comprend 6 atomes de carbone ou plus.

## Revendications

1. Procédé d'obtention d'un revêtement hydrophobe/oléophobe sur un substrat de préférence constitué d'un matériau verrier, d'une céramique, ou d'une vitrocéramique, ledit procédé **se caractérisant en ce qu'**il comprend :
a) une première étape consistant à appliquer sur ledit substrat une première couche de primage obtenue à partir d'un agent de primage de formule :
(X¹)_{3-q}(R¹)_{q} Si - R³ - Si (X²)_{3-q'}(R²)_{q'}
dans laquelle
- Si est le silicium ;
- R³ représente une chaîne carbonée linéaire, ramifiée, ou aromatique, de préférence linéaire, dans lequel le nombre de carbones établissant la liaison entre les deux atomes de silicium est inférieur à 6 et de préférence est compris entre 1 et 4;
- R¹ et R² représentent chacun un groupe alkyle ou un atome d'hydrogène ;
- X¹ et X² sont des groupements hydrolysables identiques ou différents ;
- q et q' sont égaux à 0 ou 1 et de préférence sont nuls et
b) une deuxième étape de dépôt sur ladite première couche d'un revêtement hydrophobe comprenant au moins un alkylsilane fluoré.

2. Procédé selon la revendication 1, dans lequel X¹ et X² sont des groupements alkoxy, de préférence méthoxy ou éthoxy, ou des groupements halogénures.

3. Procédé selon la revendication 1 ou 2, **caractérisé en ce que** l'étape de dépôt du revêtement hydrophobe est mise en oeuvre à partir d'une solution obtenu à partir d'un perfluoroalkylsilane de formule :
F₃C-(CF₂)ₘ-(CH₂)ₙ-Si(X)₃₋ₚ(R)ₚ
dans laquelle :
- m = 0 à 15, de préférence 5 à 9;
- n = 1 à 5, de préférence n = 2
- p = 0, 1 ou 2, de préférence 0 ou 1, de manière très préférée 0;
- R est un groupe alkyle ou un atome d'hydrogène ; et
- X est un groupement hydrolysable tel qu'un groupement halogénure ou un groupement alkoxy.

4. Procédé selon la revendication 1 ou 2, **caractérisé en ce que** l'étape de dépôt du revêtement hydrophobe est mise en oeuvre à partir d'une solution obtenu à partir d'un perfluoroalkylsilane du type perfluoropolyéthersilane.

5. Procédé selon la revendication 4, dans lequel ledit perfluoropolyéthersilane est de formule : 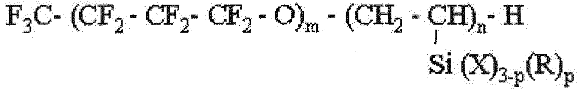 ou de formule 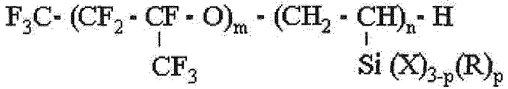 dans lesquelles:
- m = 2 à 30
- n = 1 à 3, de préférence n = 1
- p = 0, 1 ou 2, de préférence 0 ou 1, de manière très préférée 0;
- R est un groupe alkyle ou un atome d'hydrogène ; et
- X est un groupement hydrolysable tel qu'un groupement halogénure ou un groupement alkoxy.

6. Produit dont la surface extérieure, par exemple constituée par un matériau verrier, céramique ou vitrocéramique, est munie au moins en partie d'un revêtement hydrophobe comprenant:
- une couche de primage directement appliquée sur ledit substrat et comprenant des groupements Si-R³-Si, R³ étant choisi dans le groupe constitué par les chaînes alkyls linéaires, ramifiées, ou aromatiques, de préférence linéaires, dans lequel le nombre de carbones établissant la liaison entre les deux atomes de silicium est inférieur à 6 et de préférence est compris entre 1 et 4,
- une couche de revêtement en liaison avec ladite couche de primage et comprenant un alkylsilane à extrémité perfluorée hydrophobe/oléophobe.

7. Produit selon la revendication 6, dans lequel ledit alkylsilane à extrémité perfluorée est du type représenté par la formule générale:
F₃C-(CF₂)ₘ-(CH₂)ₙ-Si
avec :
- m = 0 à 15, de préférence 5 à 9;
- n = 1 à 5, de préférence n = 2.

8. Produit selon la revendication 6, dans lequel ledit alkylsilane à extrémité perfluorée comprend un groupement du type perfluroropolyéther.

9. Produit selon la revendication 8, dans lequel ledit alkylsilane est du type représenté par la formule générale: 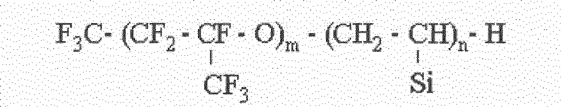 ou par la formule générale : 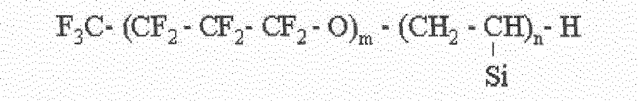 dans lesquelles
- m = 2 à 30
- n = 1 à 3, de préférence n = 1.

10. Produit selon la revendication 6, dans lequel la couche de revêtement hydrophobe comprend ou est constituée par le mélange d'un alkylsilane selon la revendication 7 et d'un alkylsilane selon la revendication 8 ou 9.

11. Produit selon l'une des revendications 6 à 10, dans lequel l'épaisseur de la couche de revêtement est comprise entre 1 et 10 nm, de préférence entre 1 et 5 nm.

12. Produit selon l'une des revendications 6 à 11, consistant en un vitrage monolithique, feuilleté ou multiple.

13. Application d'un produit selon l'une des revendications 6 à 12 en tant que vitrage de véhicule de transport ou pour le bâtiment.

14. Application d'un produit selon l'une des revendications 6 à 12 en tant que plaque de cuisson vitrocéramique ou porte de four.

15. Application d'un produit selon l'une des revendications 6 à 12 en tant qu'élément de mobilier urbain, notamment comme élément d'Abribus, en tant qu'élément mobilier, notamment comme miroir, tablette de rangement, tablette pour appareil électroménager tel que réfrigérateur, élément de cabine de douche, cloison ou en tant qu'écran, notamment écran de télévision, écran tactile, écran plasma.

## Patentansprüche

1. Verfahren zum Erhalten einer hydrophoben/oleophoben Beschichtung auf einem Substrat, das vorzugsweise aus einem Glasmaterial, einer Keramik oder einer Glaskeramik besteht, wobei das Verfahren **dadurch gekennzeichnet ist, dass** es Folgendes umfasst:
a) einen ersten Schritt, in dem man auf das Substrat eine erste Grundierungsschicht aufbringt, die ausgehend von einem Grundierungsmittel der folgenden Formel erhalten wird:
(X¹)_{3-q}(R¹)_{q}Si-R³-Si(X²)_{3-q'}(R²)_{q'}
worin
- Si Silizium ist;
- R³ eine gerade, verzweigte oder aromatische, vorzugsweise gerade, Kohlenstoffkette darstellt, wobei die Anzahl der Kohlenstoffatome, die die Verbindung zwischen den beiden Siliziumatomen herstellen, kleiner als 6 ist und vorzugsweise zwischen 1 und 4 beträgt;
- R¹ und R² jeweils eine Alkylgruppe oder ein Wasserstoffatom darstellen;
- X¹ und X² gleiche oder verschiedene hydrolysierbare Gruppen sind;
- q und q' gleich 0 oder 1 und vorzugsweise null sind, und
b) einen zweiten Schritt, in dem man auf der ersten Schicht ein hydrophobe Beschichtung abscheidet, die mindestens ein fluoriertes Alkylsilan umfasst.

2. Verfahren nach Anspruch 1, wobei X¹ und X² Alkoxygruppen, vorzugsweise Methoxy- oder Ethoxygruppen, oder Halogenidgruppen sind.

3. Verfahren nach Anspruch 1 oder 2, **dadurch gekennzeichnet, dass** der Schritt der Abscheidung der hydrophoben Beschichtung ausgehend von einer Lösung durchgeführt wird, die aus einem Perfluoralkylsilan der folgenden Formel erhalten wird:
F₃C-(CF₂)ₘ-(CH₂)ₙ-Si(X)₃₋ₚ(R)ₚ,
worin:
- m = 0 bis 15, vorzugsweise 5 bis 9;
- n = 1 bis 5, vorzugsweise n = 2
- p = 0, 1 oder 2, vorzugsweise 0 oder 1, besonders bevorzugt 0;
- R eine Alkylgruppe oder ein Wasserstoffatom ist und
- X eine hydrolysierbare Gruppe, wie eine Halogenidgruppe oder eine Alkoxygruppe, ist.

4. Verfahren nach Anspruch 1 oder 2, **dadurch gekennzeichnet, dass** der Schritt der Abscheidung der hydrophoben Beschichtung ausgehend von einer Lösung durchgeführt wird, die aus einem Perfluoralkylsilan des Perfluorpolyethersilan-Typs erhalten wird.

5. Verfahren nach Anspruch 4, wobei das Perfluorpolyethersilan die folgende Formel: 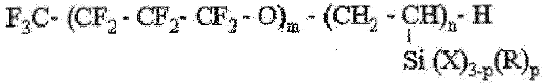 oder die Formel 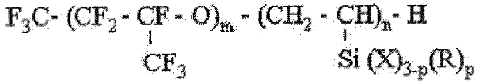 hat, in denen:
- m = 2 bis 30
- n = 1 bis 3, vorzugsweise n = 1
- p = 0, 1 oder 2, vorzugsweise 0 oder 1, besonders bevorzugt 0;
- R eine Alkylgruppe oder ein Wasserstoffatom ist und
- X eine hydrolysierbare Gruppe, wie eine Halogenidgruppe oder eine Alkoxygruppe, ist.

6. Produkt, dessen äußere Oberfläche, die zum Beispiel aus einem Glasmaterial, Keramikmaterial oder Glaskeramikmaterial besteht, zumindest zum Teil mit einer hydrophoben Beschichtung versehen ist, die Folgendes umfasst:
- eine Grundierungsschicht, die direkt auf das Substrat aufgebracht ist und Gruppen Si-R³-Si umfasst, wobei R³ aus der Gruppe ausgewählt ist, die aus geraden, verzweigten oder aromatischen, vorzugsweise geraden, Alkylketten besteht, wobei die Anzahl der Kohlenstoffatome, die die Verbindung zwischen den beiden Siliziumatomen herstellen, kleiner als 6 ist und vorzugsweise zwischen 1 und 4 beträgt,
- eine Beschichtungsschicht in Verbindung mit der Grundierungsschicht, die ein Alkylsilan mit einem hydrophoben/oleophoben perfluorierten Ende umfasst.

7. Produkt nach Anspruch 6, wobei das Alkylsilan mit perfluoriertem Ende von dem Typ ist, der durch die folgende allgemeine Formel dargestellt wird:
F₃C-(CF₂)ₘ-(CH₂)ₙ-Si
mit:
- m = 0 bis 15, vorzugsweise 5 bis 9;
- n = 1 bis 5, vorzugsweise n = 2.

8. Produkt nach Anspruch 6, wobei das Alkylsilan mit perfluoriertem Ende eine Gruppe des Perfluorpolyether-Typs umfasst.

9. Produkt nach Anspruch 8, wobei das Alkylsilan von dem Typ ist, der durch die allgemeine Formel: 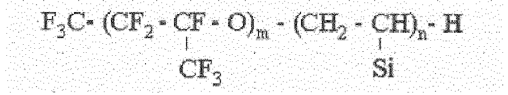 oder durch die allgemeine Formel: 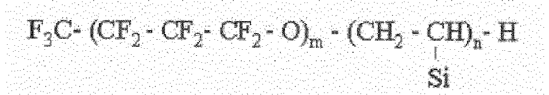 dargestellt wird, in denen
- m = 2 bis 30
- n = 1 bis 3, vorzugsweise n = 1.

10. Produkt nach Anspruch 6, wobei die hydrophobe Beschichtungsschicht das Gemisch eines Alkylsilans nach Anspruch 7 und eines Alkylsilans nach Anspruch 8 oder 9 umfasst oder daraus besteht.

11. Produkt nach einem der Ansprüche 6 bis 10, wobei die Dicke der Beschichtungsschicht zwischen 1 und 10 nm, vorzugsweise zwischen 1 und 5 nm beträgt.

12. Produkt nach einem der Ansprüche 6 bis 11, das aus einer monolithischen Verglasung, einer Verbundverglasung oder einer Mehrfachverglasung besteht.

13. Anwendung eines Produkts nach einem der Ansprüche 6 bis 12 als Transportfahrzeug-Verglasung oder im Bauwesen.

14. Anwendung eines Produkts nach einem der Ansprüche 6 bis 12 als Glaskeramik-Kochfeld oder Ofentür.

15. Anwendung eines Produkts nach einem der Ansprüche 6 bis 12 als Stadtmobiliarelement, insbesondere als Bushäuschenelement, als Mobiliarelement, insbesondere als Spiegel, Ablage, Trageboden für elektrisches Haushaltsgerät, wie Kühlschrank, Duschkabinenelement, Zwischenwand oder als Bildschirm, insbesondere Fernsehbildschirm, Berührungsschirm, Plasmabildschirm.

## Claims

1. A process for obtaining a hydrophobic/oleophobic coating on a substrate preferably constituted of a glass, ceramic or vitroceramic material, said process being **characterized in that** it comprises:
a) a first step that consists in applying to said substrate a first priming layer obtained from a priming agent of formula:
(X¹)_{3-q} (R¹) _{q}Si-R³-Si (X²)_{3-q'} (R²)_{q'}
in which
- Si is silicon;
- R³ represents a linear, branched or aromatic, preferably linear, carbon-based chain in which the number of carbons establishing the bond between the two silicon atoms is less than 6 and is preferably between 1 and 4;
- R¹ and R² each represent an alkyl group or a hydrogen atom;
- X¹ and X² are identical or different hydrolyzable groups;
- q and q' are equal to 0 or 1 and are preferably 0, and
b) a second step of depositing onto said first layer a hydrophobic coating comprising at least one fluorinated alkylsilane.

2. The process as claimed in claim 1, in which X¹ and X² are alkoxy groups, preferably methoxy or ethoxy, or halide groups.

3. The process as claimed in claim 1 or 2, **characterized in that** the step of depositing the hydrophobic coating is performed using a solution obtained from a perfluoroalkylsilane of formula:
F₃C-(CF₂)ₘ-(CH₂)ₙ-Si(X)₃₋ₚ(R)ₚ
in which:
- m = 0 to 15, preferably 5 to 9;
- n = 1 to 5, preferably n = 2;
- p = 0, 1 or 2, preferably 0 or 1 and most preferably 0;
- R is an alkyl group or a hydrogen atom; and
- X is a hydrolyzable group such as a halide group or an alkoxy group.

4. The process as claimed in claim 1 or 2, **characterized in that** the step of depositing the hydrophobic coating is performed using a solution obtained from a perfluoroalkylsilane of the perfluoropolyethersilane type.

5. The process as claimed in claim 4, in which said perfluoropolyethersilane is of formula: 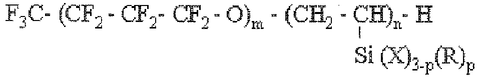 or of formula 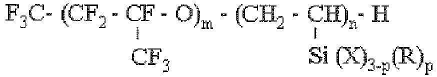 in which:
- m = 2 to 30;
- n = 1 to 3, preferably n = 1;
- p = 0, 1 or 2, preferably 0 or 1 and most preferably 0;
- R is an alkyl group or a hydrogen atom; and
- X is a hydrolyzable group such as a halide group or an alkoxy group.

6. A product whose outer surface, for example constituted by a glass, ceramic or vitroceramic material, is at least partly equipped with a hydrophobic coating comprising:
- a priming layer directly applied onto said substrate and comprising groups Si-R³-Si, R³ being chosen from the group constituted by linear, branched or aromatic, preferably linear, alkyl chains in which the number of carbons establishing the bond between the two silicon atoms is less than 6 and is preferably between 1 and 4,
- a coating layer in connection with said priming layer and comprising an alkylsilane with a hydrophobic/oleophobic perfluorinated end group.

7. A product as claimed in claim 7, in which said alkylsilane with a perfluorinated end group is of the type represented by the general formula:
F₃C-(CF₂)ₘ-(CH₂)ₙ-Si
with:
- m = 0 to 15, preferably 5 to 9;
- n = 1 to 5, preferably n = 2.

8. A product as claimed in claim 6, in which said alkylsilane containing a perfluorinated end group comprises a group of the perfluoropolyether type.

9. A product as claimed in claim 8, in which said alkylsilane is of the type represented by the general formula: 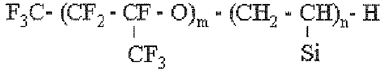 or by the general formula: 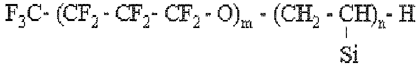 in which:
- m = 2 to 30;
- n = 1 to 3, preferably n = 1.

10. A product as claimed in claim 6, in which the hydrophobic coating layer comprises or is constituted by the mixture of an alkylsilane as claimed in claim 7 and of an alkylsilane as claimed in claim 8 or 9.

11. A product as claimed in one of claims 6 to 10, in which the thickness of the coating layer is between 1 and 10 nm and preferably between 1 and 5 nm.

12. A product as claimed in either of claims 6 to 11, consisting of monolithic, laminated or multiple glazing.

13. The application of a product as claimed in either of claims 6 to 12 as glazing for a transportation vehicle or for buildings.

14. The application of a product as claimed in either of claims 6 to 12 as a vitroceramic cooking hob or an oven door.

15. The application of a product as claimed in either of claims 6 to 12 as a component of urban furnishing, especially such as a bus shelter component, as a furnishing component, especially such as a mirror, a storage tray, a tray for a household electrical appliance such as a refrigerator, a shower cabin component or a partition wall, or as a screen, especially a television screen, a touch screen or a plasma screen.
